# EUROPEAN PATENT APPLICATION

(11) **EP 1 775 848 A1**
(43) Date of publication of application: **18.04.2007**
(21) Application number: 06021427.7
(22) Date of filing: 12.10.2006
(51) Int. Cl.: H04B 1/69, H04L 12/56, H04L 27/00, H04B 7/26, H04Q 7/34

(54) **Hybrid RF network with high precision ranging**

(30) Priority: 12.10.2005 US 248745
(71) Applicant: HARRIS CORPORATION, Melbourne, Florida 32919 (US)
(72) Inventor: Roberts, Richard Dean, Oregon 97124 (US)
(74) Representative: Schmidt, Steffen J.

(57) **Abstract**

A wireless network can include two or more nodes (300), each having an ultra wideband (UWB) transceiver (304) configured for determining a range between the nodes using UWB ranging techniques. In addition, each node (300) has a narrow-band transceiver (302) for communicating data between each of the nodes (300) using a narrow-band radio protocol.

## Description

### BACKGROUND OF THE INVENTION

### Statement of the Technical Field

The inventive arrangements relate to ultra-wideband RF systems, and more particularly to command and control systems useful for integrating with such systems.

### Description of the Related Art

Ultra-wideband (UWB) communication systems are generally defined as those that occupy more than 500 MHz of spectrum or that have a fractional bandwidth that exceeds 0.2. UWB communication systems have generally been implemented as impulse based systems. The pulse length can be of very short duration, e.g., 200 picoseconds and relatively low power. Modulation techniques for UWB are varied but can include pulse position modulation (PPM), pulse amplitude modulation (PAM), on-off keying (OOK), and bi-phase modulation (BPSK).

UWB systems are increasingly of interest for use in connection with a broad range of applications. For example, it offers the potential for very high data rates at relative short distances, it is resistant to interference and multipath, and it is difficult to intercept using traditional techniques. At longer distances, UWB communication systems generally offer lower data rates, but the basic approach has been found to be well suited for location tracking and ranging applications. For example, U.S. Patent No. 6,133,876 to Fullerton, et al. discloses a ranging system. One significant advantage of UWB ranging technology is that it offers sub-meter ranging performance due to its inherently wide bandwidth. Time of arrival (TOA), one way ranging (OWR), two way ranging (TWR), time difference of arrival (TDOA), and received signal strength indicator (RSSI) are all techniques that are known in the art for use in connection with UWB ranging systems. All of these systems having advantages and disadvantages that are well understood among those skilled in the UWB field.

Very large processing gain can be achieved with UWB signals. For example, such processing gain can be in the range of about 50 dB. This substantial processing gain is very important in UWB systems because they typically operate at very low transmit power, and the processing gain is necessary to achieve reasonable coverage ranges. Processing gain provides great advantages in coverage range, but the drawback to such processing is the time it takes to perform acquisition and synchronization. Consequently, UWB packets need to be sent at a relatively low data rate. For example, data rates can be on the order of 10 to 100 kbps in a UWB system that uses a few GHz of bandwidth.

Traditionally, UWB networks have been used for both ranging and data purposes. Within such systems, the UWB ranging data that has been acquired typically needs to be communicated back through the network to a data collection node. In addition, control commands often need to be sent forward to mobile radio nodes. Combining these control and data communications with the UWB ranging functions can offer some advantages. However, using the same UWB network for both ranging activity and data communications tends to result in very slow network performance overall. Such slow network performance can typically result from the additional processing overhead associated with the ad-hoc networking techniques which must be employed to communicate the ranging data out of the network. In fact, even with a relatively limited number of nodes, the combined processing load can result in poor system performance.

### SUMMARY OF THE INVENTION

The invention concerns an apparatus and method for operating a wireless network. The wireless network can include two or more nodes. Each node can include a UWB transceiver that is configured for determining a range between nodes using ultra wideband (UWB) ranging technique. As used herein, the term UWB generally refers to impulse based techniques that rely on very short pulses that have a bandwidth of at least about 500 MHz. Each node can also include a narrow-band RF transceiver for implementing a wireless local area network communicating data between the nodes using a network protocol. As used herein, the term narrow-band can refer to RF transmissions having a bandwidth of less than about 200 MHz. The data transmitted over the plurality of nodes using the local area network can include command and control data for the nodes.

According to one aspect of the invention, the UWB transceivers can be used only for performing the ultra wideband ranging techniques. Likewise, the narrow-band RF transceivers and the local area network can be used exclusively for communicating data among the plurality of nodes.

The UWB ranging technique used with the wireless network can be selected from among a variety of known UWB ranging techniques without limitation. For example, the ranging technique can include time of arrival (TOA) ranging, one way ranging (OWR), two-way ranging (TWR), time difference of arrival (TDOA), and received signal strength indicator (RSSI). Such ranging techniques are well known in the art. Similarly, the network protocol for the wireless local area network can be based on any of a variety of well known network protocols that are compatible with narrow-band transmissions. For example, the network protocol can be based on the IEEE 802.11 set of standards or the IEEE 802.15 standards.

The invention can also include a method for operating a wireless network. The method can include several steps, including determining at least one range as between a plurality of nodes using ultra wideband (UWB) ranging techniques. The method can also include communicating data between each of the plurality of nodes using the local area network and the narrow-band RF transceivers. For example, the UWB transceivers respectively associated with each of the plurality of nodes can be used exclusively for performing the ultra wideband ranging techniques, whereas local area network and the narrow-band radio transceivers respectively associated with each of the nodes can be used exclusively for the step of communicating data. The data can include command and control communications.

As with the apparatus, the method can make use of any of several well known UWB ranging techniques. These can include time of arrival (TOA) ranging, one way ranging (OWR), two-way ranging (TWR), time difference of arrival (TDOA), and received signal strength indicator (RSSI). The method can further include selecting the network protocol to be compatible with at least one standard protocol. For example the protocol can be based on the IEEE 802.11 standard or the IEEE 802.15 standard.

### BRIEF DESCRIPTION OF THE DRAWINGS

Fig. 1 is a network diagram showing a star topology that is useful for understanding the invention.
Fig. 2 is a network diagram showing a mesh topology that is useful for understanding the invention.
Fig. 3 is a block diagram of a hybrid network node that includes a narrow band LAN network transceiver and a UWB transceiver.
Fig. 4 is a flowchart that is useful for understanding the invention.

### DETAILED DESCRIPTION OF THE PREFERRED EMBODIMENTS

Ultra wideband (UWB) networks can be used for both ranging and data purposes. As used herein, the term UWB generally refers to impulse based RF transmission techniques that use very short pulses and have a bandwidth of at least about 500 MHz. UWB networks of this type are well known in the art.

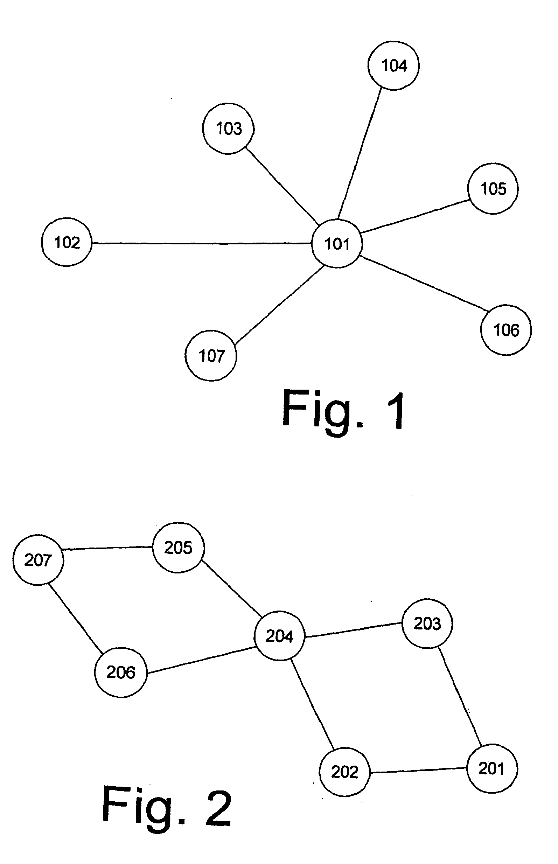

Fig. 1 shows a UWB network 100 that has a star topology. Classic star network topologies are generally well suited for UWB applications where sensor nodes 102-107 are within range of a network end point 101. Fig. 2 shows a UWB network that has a mesh topology. Mesh topologies are commonly used for UWB applications where some sensor nodes 202-207 of the network 200 may not be within range of a network access point 201. A UWB network having a mesh topology permits the network 200 to be distributed over a wider area while still maintaining relatively short link ranges. The present invention can be used with networks having star topologies, mesh topologies, or any other topology.

UWB ranging data that has been acquired in the UWB networks of Figs. 1 and 2 typically needs to be communicated back through the network to a data collection node. For example, this collection node could be the network access point 101, 201 in Figs. 1 and 2. In addition, control commands often need to be sent forward to mobile radio nodes. Combining these control and data communications with the UWB ranging functions can result in very slow network performance overall. In fact, even with a relatively limited number of nodes, the combined processing load can result in poor system performance.

In order to overcome this limitation, the ranging and data transmission functions can be separated in the networks of Figs. 1 and 2. For example, in Figs. 1 and 2, each of the network nodes 101-107 and 201-207 can utilize conventional UWB ranging techniques to determine a range as between nodes. However, data transmissions between the nodes can be performed primarily using a narrow-band wireless local area network overlaid on the UWB ranging network. The wireless local area network can include a physical layer that communicates between the nodes using relatively narrow-band RF transmissions. Consequently, highly accurate UWB ranging can be provided while the overall data network performance can be greatly improved. The foregoing arrangement eliminates from the UWB portion of the system the additional processing overhead that typically is associated with ad hoc wireless data networks. It also allows the network to take advantage of carrier sense medium access control (MAC) algorithms that generally cannot be used with UWB.

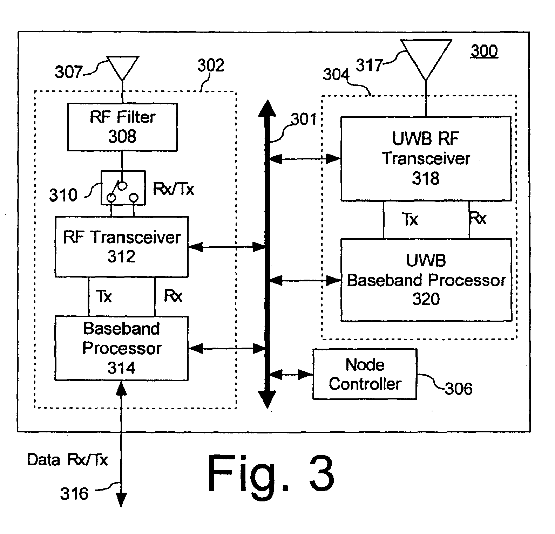

Fig. 3 shows an example of a node 300 that can be used in a network such as those shown in Figs. 1 and 2. The node 300 is arranged so that it separates the ranging and data functions for improved overall network performance. Each node 300 can include a wireless LAN transceiver 302 and a UWB transceiver 304, each coupled to at least one suitable antenna 307, 317. Node 300 can be linked to a computer, weapon system, location device (GPS) and so on. The node 300 could also be connected to a separate wired or wireless network.

Wireless LAN transceiver 302 can include conventional transceiver circuitry suitable necessary for implementing a relatively narrow-band wireless LAN network. For example, the wireless LAN transceiver 302 can include an RF filter 308, a transmit/receive switch 310, an RF transceiver 312, and baseband processor 314. The baseband processor 314 can include suitable data interface circuitry for communicating with a network device using port 316. Baseband processor 314 can further include any necessary modulator, demodulator, analog to digital converter, digital to analog converter, clock, control circuitry (e.g. controller or microprocessor with suitable programming) and memory. The control circuitry can control the operation of the narrow-band wireless LAN transceiver 302, including controlling the RF transceiver 312 and managing media access control (MAC).

Wireless LAN transceivers of the type shown in Fig. 3 are well known in the art. For example, wireless LAN transceiver 302 can be configured as a device that is compatible with any of the IEEE family of standards designated as 802.11 or 802.15. The wireless LAN transceiver 302 can also be configure to be compatible with any other narrow-band wireless networking standard that is presently known or may become known in the future.

As used herein, the term narrow-band should be understood as referring to any wireless network that communicates between nodes using RF transmissions having a bandwidth that is substantially more narrow as compared to UWB type transmissions. More particularly, narrow-band transmissions can generally include wireless LAN devices that communicate using RF transmissions having a bandwidth of less than about 200 MHz. For example, the IEE 802.11 operates using frequency hopping spread spectrum (FHSS) or direct sequence spread spectrum (DSSS) in the 2.4 GHz frequency band. When FHSS is used, the 2.4GHz band is divided into 75 channels spaced 1-MHz apart. In contrast, DSSS divides the 2.4GHz band into 11 channels for the FCC or North American domain (13 channels for the European or ETSI domain). These channels have a specified center frequency separation of only 5 MHz and an overall channel bandwidth of 22 MHz. Notwithstanding the foregoing specifications, those skilled in the art will appreciate that the actual RF spectrum associated with the foregoing transmissions extends well beyond the 22-MHz bandwidth of the channel (+/- 11 MHz from f_{c}). However, radiated energy must be 30 dB lower than the maximum signal level at 11 MHz from the center of the channel. At 22 MHz away, the energy must be 50 dB below the maximum level. Thus, the term narrow-band could also refer more particularly to wireless LAN networks that communicate using RF transmissions having a bandwidth of less than about 50 MHz.

UWB transceiver 304 can include an RF transceiver 318 and UWB baseband processor 320. The architecture of RF transceiver 318 and baseband processor 320, as well as any necessary programming can be arranged for determining a distance or range between nodes in the network using a conventional UWB ranging technique. The particular ranging technique selected is not critical. For example, the ranging technique can include time of arrival (TOA) ranging, one way ranging (OWR), two-way ranging (TWR), time difference of arrival (TDOA), and received signal strength indicator (RSSI). The methods and processes for implementing these techniques are well known in the art. Likewise, the any suitable architecture of RF transceiver 318 and baseband processor 320 can be used, provided that it is capable of performing the required UWB ranging function as described herein.

A node controller 306 can be provided for controlling the operation of the node 300. For example, the node controller 306 can manage system resources, control the flow of range information from UWB baseband processor 320 to the narrow-band wireless LAN transceiver 302, handle interrupts, and perform any other necessary activities for coordinating the operation of the UWB transceiver with the wireless LAN transceiver.

According to one aspect of the invention, the UWB transceivers can be used only for performing the ultra wideband ranging. Likewise, the narrow-band wireless LAN transceiver 302 and the local area network with which it communicates can be used exclusively for communicating data among the plurality of nodes. The data that is communicated can be any type of data. However, the data communicated on the narrow-band wireless LAN network can also include range data that has been determined by using the UWB ranging techniques. For example, ranging data determined using the UWB portion of the system can be propagated across the network to one or more nodes using the narrow-band wireless LAN portion of the network.

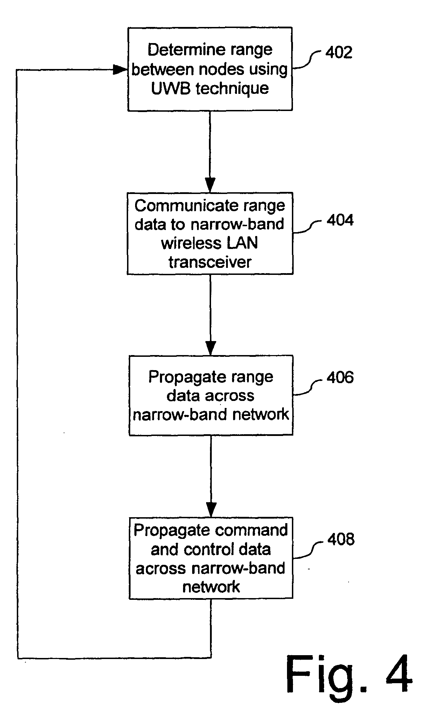

Those skilled in the art will appreciate that the invention can also include a method for operating a wireless network. The method is illustrated in the flowchart of Fig. 4. The method can begin with step 402 by determining at least one range as between a plurality of nodes using ultra wideband (UWB) ranging techniques. The method can optionally include communicating the range data to a narrow-band wireless LAN transceiver in step 404. Further, the method can include propagating the range data over a narrow-band wireless LAN network that includes a plurality of nodes. This step can be accomplished using narrow-band RF transceivers 302. Command and control data can also be propagated across the narrowband wireless LAN network using wireless LAN transceiver 302.

According to one embodiment of the invention, the UWB transceivers respectively associated with each of the plurality of nodes can be used exclusively for performing the ultra wideband ranging techniques, whereas local area network and the narrow-band radio transceivers respectively associated with each of the nodes can be used exclusively for the step of communicating data. However, the invention is not limited in this regard. Accordingly, some ranging functions could be performed using the narrow-band wireless LAN network comprised of a plurality of narrow-band transceiver 302. Likewise, some amount of data could also be communicated using UWB transceiver 304. As with the apparatus, the method can make use of any of several well known UWB ranging techniques. The method can further include selecting the network protocol for the narrow-band wireless LAN network to be compatible with at least one standard protocol. For example the protocol can be based on the IEEE 802.11 standard or the IEEE 802.15 standard.

## Claims

1. A method for operating a wireless network comprising:
determining at least one range as between a plurality of nodes using ultra wideband (UWB) ranging techniques;
communicating data between each of said plurality of nodes using a wireless local area network that includes a physical layer that communicates between said nodes using narrow-band RF transmissions.

2. The method according to claim 1, further comprising using a plurality of UWB transceivers respectively associated with each of said plurality of nodes exclusively for performing said ultra wideband ranging techniques.

3. The method according to claim 2, further comprising using said narrow-band RF transmissions exclusively for said step of communicating data.

4. The method according to claim 3, further comprising using said narrow-band RF transmission for command and control communications.

5. The method according to claim 1, further comprising selecting said UWB ranging techniques from the group consisting of time of arrival (TOA) ranging, one way ranging (OWR), two-way ranging (TWR), time difference of arrival (TDOA), and received signal strength indicator (RSSI).

6. A wireless network comprising:
a plurality of nodes, each comprising (a) a UWB transceiver configured for determining at least one range as between said plurality of nodes using at least one ultra wideband (UWB) ranging technique, and (b) a narrow-band RF transceiver communicating data between each of said plurality of nodes, said narrow-band transceiver part of a wireless local area network that includes a physical layer that communicates between said nodes by using a narrow-bandwidth RF transmission.

7. The wireless network according to claim 6, wherein said plurality of UWB transceivers exclusively performs said ultra wideband ranging techniques.

8. The wireless network according to claim 7, wherein said plurality of narrow-band RF transceivers exclusively communicates data among said plurality of nodes.

9. The wireless network according to claim 8, wherein said plurality of narrow-band RF transceivers further communicate command and control data.

10. The wireless network according to claim 6, wherein said at least one UWB ranging technique is selected from the group consisting of time of arrival (TOA) ranging, one way ranging (OWR), two-way ranging (TWR), time difference of arrival (TDOA), and received signal strength indicator (RSSI).

11. The wireless network according to claim 6, wherein said wireless local area network is based on a network protocol selected from the group consisting of an IEEE 802.11 standard and an IEEE 802.15 standard.
